# EUROPÄISCHE PATENTANMELDUNG

(11) **EP 0 805 083 A2**
(43) Veröffentlichungstag der Anmeldung: **05.11.1997**
(21) Anmeldenummer: 97104235.3
(22) Anmeldetag: 13.03.1997
(51) Int. Cl.: B60T 7/20

(54) **Zugvorrichtung für Fahrzeuganhänger**

(30) Priorität: 29.04.1996 DE 19617065
(71) Anmelder: BPW Bergische Achsen Kommanditgesellschaft, 51674 Wiehl (DE)
(72) Erfinder: Dowe, Günter, 51588 Nümbrecht (DE)
(74) Vertreter: Stenger, Watzke & Ring Patentanwälte

(57) **Zusammenfassung**

Die Erfindung betrifft eine Zugvorrichtung für Fahrzeuganhänger mit einer Auflaufbremseinrichtung, die bei einer Relativbewegung zwischen einer mit der Kupplung für ein Zugfahrzeug verbundenen Zugstange (4) und einer mit dem Anhängerfahrzeugrahmen verbundenen Zugdeichsel mittels einer Übertragungseinrichtung auf ein Bremsgestänge wirkt. Die Übertragungseinrichtung wird durch einen Bowdenzug (7) gebildet, dessen Hülle mit ihrem vorderen Ende an der Zugstange (4) festgelegt und dessen Litze mit ihrem vorderen Ende mit dem Gehäuse (3) der am vorderen Ende der Zugdeichsel angeordneten Auflaufbremseinrichtung verbunden ist. Das hintere Ende der Hülle (7a) des Bowdenzuges (7) kann entweder an einem Festpunkt an der Zugdeichsel oder am Anhängerfahrzeugrahmen oder an einem an der Zugdeichsel oder am Anhängerfahrzeugrahmen gelagerten, mit dem Bremsgestänge verbundenen Übertragungshebel festgelegt sein. Das hintere Ende der Litze (7b) des Bowdenzuges (7) wird entweder mit dem Bremsgestänge bzw. mit einem mit diesem verbundenen Übersetzungshebel oder mit einem Festpunkt an der Zugdeichsel oder am Fahrzeugrahmen verbunden.

## Beschreibung

Die Erfindung betrifft eine insbesondere höhenverstellbare Zugvorrichtung für Fahrzeuganhänger mit einer Auflaufbremseinrichtung, die bei einer Relativbewegung zwischen einer mit der Kupplung für ein Zugfahrzeug verbundenen Zugstange und einer mit dem Anhängerfahrzeugrahmen verbundenen Zugdeichsel mittels einer Übertragungseinrichtung auf ein Bremsgestänge wirkt.

Derartige Zugvorrichtungen für Fahrzeuganhänger sind auch in höhenverstellbarer Ausführung bekannt. Die Übertragungseinrichtung umfaßt bei den bekannten Konstruktionen einen üblicherweise im Bereich der Auflaufbremseinrichtung angeordneten Umlenkhebel, der nicht nur das Gewicht des vorderen Teils der Zugvorrichtung erhöht, sondern auch die Bodenfreiheit einschränkt.

Der Erfindung liegt die **Aufgabe** zugrunde, eine Zugvorrichtung der voranstehend beschriebenen Art derart weiterzubilden, daß im Bereich der am vorderen Ende der Zugdeichsel angeordneten, als Lager für die Zugstange dienenden Auflaufbremseinrichtung keine die Bodenfreiheit einschränkenden und das vordere Ende der Zugdeichsel mit Gewicht belastenden Teile vorhanden sind.

Die **Lösung** dieser Aufgabenstellung durch die Erfindung ist dadurch gekennzeichnet, daß die Übertragungseinrichtung durch einen Bowdenzug gebildet ist, dessen Hülle mit ihrem vorderen Ende an der Zugstange und mit ihrem hinteren Ende an einem Festpunkt an der Zugdeichsel oder am Anhängerfahrzeugrahmen festgelegt und dessen Litze mit ihrem vorderen Ende mit dem Gehäuse der am vorderen Ende der Zugdeichsel angeordneten Auflaufbremseinrichtung und mit ihrem hinteren Ende mit dem Bremsgestänge bzw. mit einem mit diesem verbundenen Übersetzungshebel verbunden ist.

Eine alternative Lösung der Aufgabenstellung durch die Erfindung besteht darin, daß die Übertragungseinrichtung durch einen Bowdenzug gebildet ist, dessen Hülle mit ihrem vorderen Ende an der Zugstange und mit ihrem hinteren Ende an einem an der Zugdeichsel oder am Anhängerfahrzeugrahmen gelagerten, mit dem Bremsgestänge verbundenen Übertragungshebel festgelegt ist und dessen Litze mit ihrem vorderen Ende mit dem Gehäuse der am vorderen Ende der Zugdeichsel angeordneten Auflaufbremseinrichtung und mit ihrem hinteren Ende mit einem Festpunkt an der Zugdeichsel oder am Fahrzeugrahmen verbunden ist.

In beiden Fällen ergibt sich eine Zugvorrichtung, bei der am vorderen Ende des Deichselrohres keine die Bodenfreiheit einschränkenden und zusätzliches Gewicht darstellenden Teile vorhanden sind.

Auf der Zeichnung sind verschiedene Ausführungsbeispiele der erfindungsgemäßen Übertragungseinrichtung für eine Zugvorrichtung schematisch dargestellt, und zwar zeigen:
- Fig. 1a: eine Seitenansicht einer ersten Ausführungsform in der Ausgangstellung,
- Fig. 1b: eine der Fig. 1a entsprechende Seitenansicht nach Betätigen der Auflaufbremseinrichtung,
- Fig. 2a: eine Seitenansicht einer zweiten Ausführungsform der Übertragungseinrichtung, wiederum in der Ausgangsstellung,
- Fig. 2b: eine der Fig. 2a entsprechende Ansicht nach Betätigen der Auflaufbremseinrichtung,
- Fig. 3a: eine Seitenansicht einer weiteren Ausführungsform der Übertragungseinrichtung in der Ausgangsstellung,
- Fig. 3b: eine Ansicht der Übertragungseinrichtung nach Fig. 3a nach Betätigen der Auflaufbremseinrichtung,
- Fig. 4a: eine schematische Seitenansicht einer vierten Ausführungsform der Übertragungeinrichtung in der Ausgangsstellung und
- Fig. 4b: eine der Fig. 4a entsprechende Ansicht nach Betätigen der Auflaufbremseinrichtung.

Bei allen vier Ausführungsbeispielen ist von der Zugvorrichtung lediglich der ggf. höhenverstellbare vordere Teil 1 einer im übrigen nicht gezeichneten Zugdeichsel dargestellt, die an ihrem hinteren Ende mit dem Fahrzeugrahmen eines Fahrzeuganhängers verbunden ist. Von diesem hinteren Teil der Zugdeichsel bzw. dem Rahmen des Fahrzeuganhängers ist auf den Zeichnungen lediglich ein als Festpunkt dienender Befestigungswinkel 2 angedeutet.

Im vorderen Teil 1 der Zugdeichsel ist eine Auflaufbremseinrichtung angeordnet, die ein Gehäuse 3 umfaßt, das im rohrförmigen Teil 1 befestigt ist. In diesem Gehäuse 3 ist eine Zugstange 4 längsbeweglich geführt, die am vorderen Ende mit einer nicht gezeichneten Kupplung für ein Zugfahrzeug versehen ist. In der Zugstange 4 ist ein Stoßdämpfer 5 angeordnet, dessen Gehäuse mittels eines Lagerbolzens 5a mit der Zugstange 4 und dessen Kolbenstange mittels eines Bolzens 6 mit dem Gehäuse 3 der Auflaufbremseinrichtung und ggf. dem rohrförmigen vorderen Teil 1 der Zugdeichsel verbunden ist. Um eine Relativbewegung der Zugstange 4 im Verhältnis zum Gehäuse 3 zu ermöglichen, ist die Zugstange 4 für den Durchtritt des Bolzens 6 mit seitlichen Schlitzen 4a versehen.

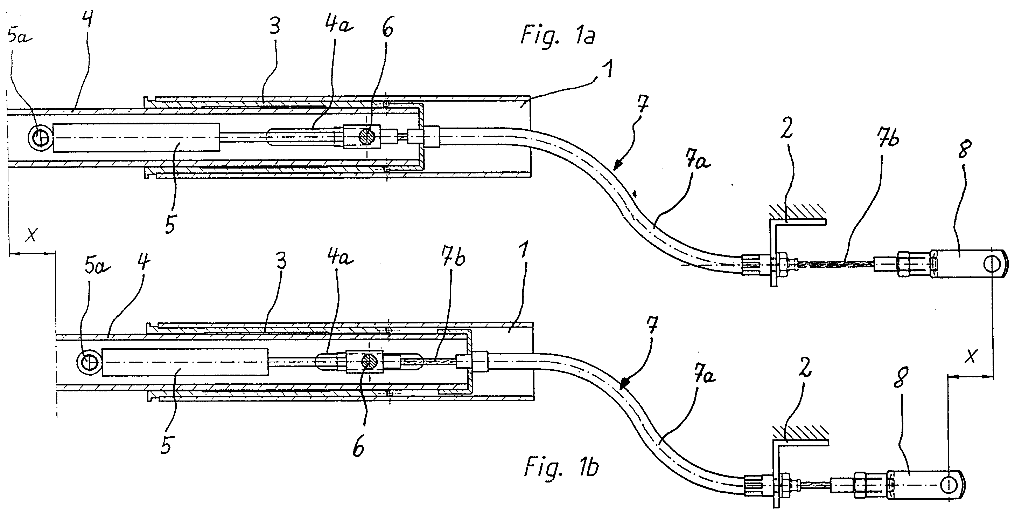

Da beim Abbremsen des Zugfahrzeuges das Anhängerfahrzeug aufgrund seiner Massenträgheit eine vom Stoßdämpfer 5 gedämpfte Relativbewegung des am vorderen Teil 1 der Zugdeichsel befestigten Gehäuses 3 relativ zur Zugstange 4 hervorruf, wird der in den Fig. 1a und 1b eingetragene Betätigungsweg X zur Erzielung der Bremswirkung auf ein Bremsgestänge der Bremse des Fahrzeuganhängers übertragen. Die hierfür verwendete Übertragungseinrichtung besteht aus einem Bowdenzug 7, dessen Hülle 7a mit ihrem vorderen Ende an der Zugstange 4 und mit ihrem hinteren Ende am Befestigungswinkel 2 befestigt ist. Die Litze 7b des Bowdenzuges 7 ist mit ihrem vorderen Ende mit dem Bolzen 6 verbunden, der auf diese Weise einen am vorderen Teil 1 der Zugdeichsel ausgebildeten Fixpunkt darstellt; das hintere Ende der Litze 7b ist mit einem Kupplungsstück 8 verbunden, das seinerseits mit dem vorderen Ende des nicht dargestellten Bremsgestänges verbunden wird.

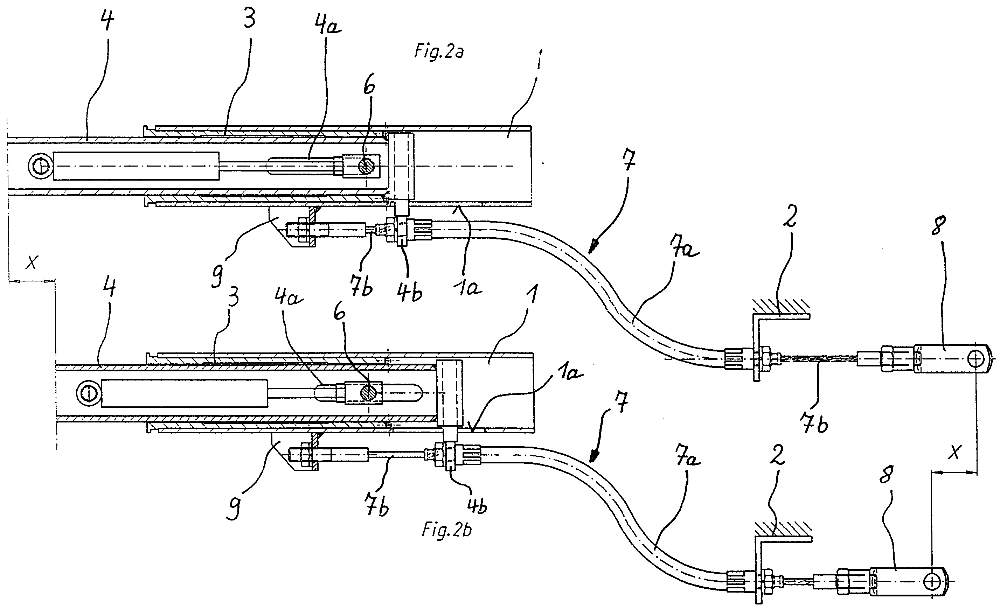

Während beim ersten Ausführungsbeispiel nach den Fig. 1a und 1b das vordere Ende der Litze 7b unmittelbar am Bolzen 6 und das vordere Ende der Hülle 7a an der hinteren Stirnfläche der Zugstange 4 festgelegt sind, zeigen die Fig. 2a und 2b des zweiten Ausführungsbeispiels insoweit eine abweichende Ausführung. Bei dieser zweiten Ausführungsform ist das vordere Ende der Hülle 7a des Bowdenzuges 7 an einem Ausleger 4b der Zugstange 4 befestigt, der durch einen Schlitz 1a nach unten aus dem rohrförmigen vorderen Teil 1 der Zugdeichsel herausragt. Das vordere Ende der Litze 7b des Bowdenzuges 7 ist bei dieser Ausführungsform an einer Konsole 9 befestigt, die an die Unterseite des rohrförmigen vorderen Teils 1 der Zugdeichsel angeschweißt ist.

Wie aus einem Vergleich der Fig. 1a und 1b bzw. 2a und 2b hervorgeht, hat der durch das Eindringen der Zugstange 4 in das Gehäuse 3 der Auflaufbremseinrichtung erzeugte Betätigungsweg X einen entsprechenden Betätigungsweg X des mit dem vorderen Ende des Bremsgestänges verbundenen Kupplungsstückes 8 zur Folge. Die Lage der mit ihrem vorderen Ende am vorderen Teil 1 der Zugdeichsel und mit ihrem hinteren Ende am Befestigungswinkel 2 der Zugdeichsel bzw. des Fahrzeugrahmens befestigten Hülle 7a des Bowdenzuges 7 bleibt hierbei unverändert. Die Eindringbewegung der Zugstange 4 in das Gehäuse 3 hat lediglich ein Herausziehen des vorderen Endes der Litze 7b aus der Hülle 7a nach vorn zur Folge und damit ein Ziehen des Kupplungsstückes 8 über den Betätigungsweg X. Diese Bewegung wird zur Betätigung der nicht dargestellten Bremseinrichtung des Fahrzeuganhängers herangezogen.

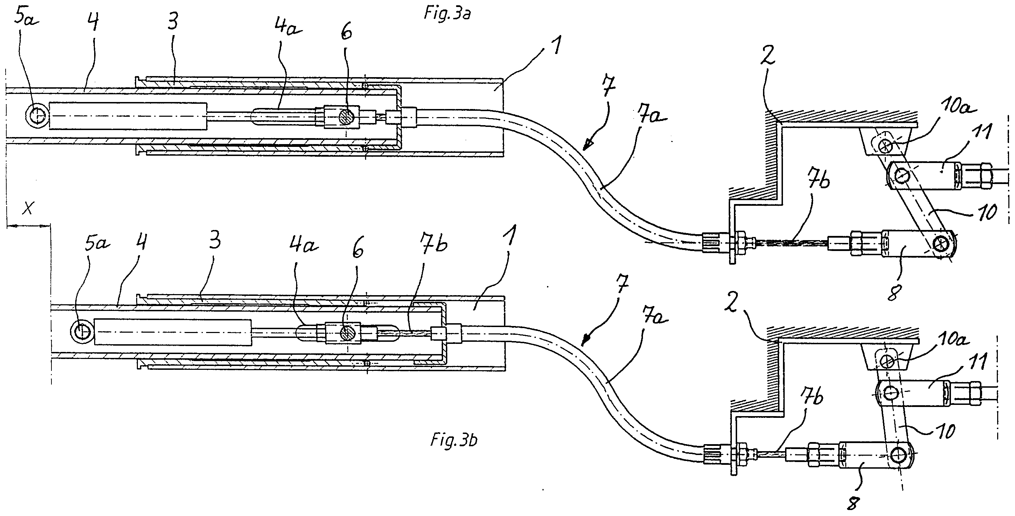

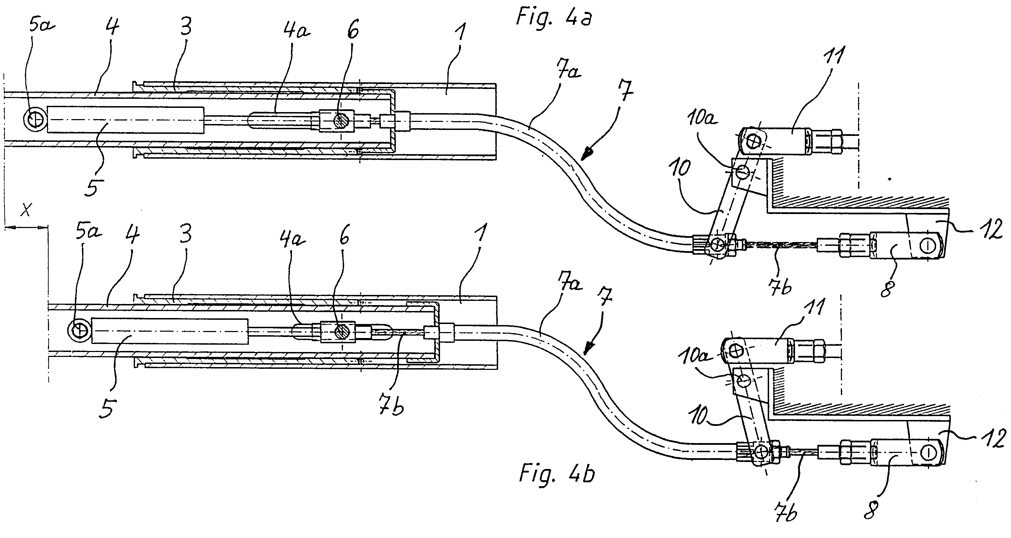

Die in den Fig. 3a und 3b bzw. 4a und 4b gezeichneten weiteren Ausführungsbeispiele verwenden einen Übersetzungshebel 10, um die Relativbewegung der Zugstange 4 gegenüber dem Gehäuse 3 auf das Bremsgestänge zu übertragen.

Beim Ausführungsbeispiel nach den Fig. 3a und 3b ist ein derartiger Übersetzungshebel 10 am Befestigungswinkel 2 verschwenkbar gelagert, und zwar mittels eines an seinem oberen Ende angeordneten Lagerbolzens 10a. Mit seinem unteren Ende ist der Übersetzungshebel 10 mit dem Kupplungsstück 8 verbunden, das wiederum am hinteren Ende der Litze 7b des Bowdenzuges 7 befestigt ist. Bei einem Betätigungsweg X zwischen Zugstange 4 und Gehäuse 3 ergibt sich auf diese Weise eine Verschwenkung des Übersetzungshebels 10 im Uhrzeigersinn, wobei das angedeutete Bremsgestänge 11 am Übersetzungshebel 10 zwischen dem Lagerbolzen 10a und dem Kupplungsstück 8 angelenkt ist.

Die vierte Ausführungsform nach den Fig. 4a und 4b unterscheidet sich von der voranstehend beschriebenen dritten Ausführungsform dadurch, daß der Übersetzungshebel 10 im mittleren Bereich mittels eines Lagerbolzens 10a am Befestigungswinkel 2 verschwenkbar gelagert ist und daß das vordere Ende des Bremsgestänges 11 am oberen Ende des Übersetzungshebels 10 angreift. Das untere Ende des Übersetzungshebels 10 ist mit dem hinteren Ende der Hülle 7a des Bowdenzuges 7 verbunden, wogegen das hintere Ende der Litze 7b mittels des Kupplungsstückes 8 an einer Tragkonsole 12 befestigt ist. Auch bei dieser Ausführungsform ergibt sich eine Verschwenkbewegung des Übersetzungshebels 10, allerdings im Gegenuhrzeigersinn, die zu einer ziehenden Betätigung des Bremsgestänges 11 führt.

### Bezugszeichenliste:

- 1: vorderer Teil der Zugdeichsel
- 1a: Schlitz
- 2: Befestigungswinkel
- 3: Gehäuse
- 4: Zugstange
- 4a: Schlitz
- 4b: Ausleger
- 5: Stoßdämpfer
- 5a: Lagerbolzen
- 6: Bolzen
- 7: Bowdenzug
- 7a: Hülle
- 7b: Litze
- 8: Kupplungsstück
- 9: Konsole
- 10: Übersetzungshebel
- 10a: Lagerbolzen
- 11: Bremsgestänge
- 12: Tragkonsole

## Patentansprüche

1. Zugvorrichtung für Fahrzeuganhänger mit einer Auflaufbremseinrichtung, die bei einer Relativbewegung zwischen einer mit der Kupplung für ein Zugfahrzeug verbundenen Zugstange und einer mit dem Anhängerfahrzeugrahmen verbundenen Zugdeichsel mittels einer Übertragungseinrichtung auf ein Bremsgestänge wirkt,
**dadurch gekennzeichnet,**
daß die Übertragungseinrichtung durch einen Bowdenzug (7) gebildet ist, dessen Hülle (7a) mit ihrem vorderen Ende an der Zugstange (4) und mit ihrem hinteren Ende an einem Festpunkt (2) an der Zugdeichsel oder am Anhängerfahrzeugrahmen festgelegt ist und dessen Litze (7b) mit ihrem vorderen Ende mit dem Gehäuse (3) der am vorderen Ende der Zugdeichsel angeordneten Auflaufbremseinrichtung und mit ihrem hinteren Ende mit dem Bremsgestänge bzw. mit einem mit diesem verbundenen Übersetzungshebel (10) verbunden ist.

2. Zugvorrichtung für Fahrzeuganhänger mit einer Auflaufbremseinrichtung, die bei einer Relativbewegung zwischen einer mit der Kupplung für ein Zugfahrzeug verbunden Zugstange und einer mit dem Anhängerfahrzeugrahmen verbundenen Zugdeichsel mittels einer Übertragungseinrichtung auf ein Bremsgestänge wirkt,
**dadurch gekennzeichnet,**
daß die Übertragungseinrichtung durch einen Bowdenzug (7) gebildet ist, dessen Hülle (7a) mit ihrem vorderen Ende an der Zugstange (4) und mit ihrem hinteren Ende an einem an der Zugdeichsel oder am Anhängerfahrzeugrahmen gelagerten, mit dem Bremsgestänge (11) verbundenen Übersetzungshebel (10) festgelegt ist und dessen Litze (7b) mit ihrem vorderen Ende mit dem Gehäuse (3) der am vorderen Ende (1) der Zugdeichsel angeordneten Auflaufbremseinrichtung und mit ihrem hinteren Ende mit einem Festpunkt an der Zugdeichsel oder am Fahrzeugrahmen verbunden ist.
